# EUROPÄISCHE PATENTSCHRIFT

(11) **EP 2 892 751 B1**
(45) Veröffentlichungstag und Bekanntmachung des Hinweises auf die Patenterteilung: **19.04.2017**
(21) Anmeldenummer: 13756460.5
(22) Anmeldetag: 02.09.2013
(51) Int. Cl.: B60K 28/14, B60R 16/03, H02J 7/00

(54) **BATTERIEANORDNUNG ZUM BETRIEB ELEKTRISCHER VERBRAUCHER IN EINEM FAHRZEUG ZUR GEFAHRGUTBEFÖRDERUNG**
BATTERY ARRANGEMENT FOR OPERATING ELECTRICAL LOADS IN A VEHICLE FOR TRANSPORTING HAZARDOUS MATERIALS
SYSTÈME DE BATTERIE POUR FAIRE FONCTIONNER DES CONSOMMATEURS ÉLECTRIQUES DANS UN VÉHICULE SERVANT AU TRANSPORT DE PRODUITS DANGEREUX

(30) Priorität: 06.09.2012 DE 102012215846
(43) Veröffentlichungstag der Anmeldung: 15.07.2015
(73) Patentinhaber: Continental Automotive GmbH, 30165 Hannover (DE)
(72) Erfinder: GRULER, Martin, 78554 Aldingen-Aixheim (DE); GRILL, Thomas, 78048 Villingen-Schwenningen (DE); WEHRLEIN, Rainer, 78073 Bad Dürrheim (DE)
(86) Internationale Anmeldenummer: PCT/EP2013/068049
(87) Internationale Veröffentlichungsnummer: WO 2014/037292

(56) Entgegenhaltungen:
- EP-A1- 1 544 050
- DE-C1- 4 211 578
- DE-C1- 19 939 987

## Beschreibung

Die vorliegende Erfindung bezieht sich auf eine Batterieanordnung, die zum Betrieb elektrischer Verbraucher in einem Fahrzeug zur Gefahrengutbeförderung geeignet ist.

Für den Gefahrenguttransport durch ein Fahrzeug gelten die speziellen Vorschriften gemäß dem Europäischen Übereinkommen über die internationale Beförderung gefährlicher Güter auf der Straße (ADR) bzw. der Gefahrgutverordnung Straße (GGVS). Ein Erfordernis dieser Vorschriften besteht darin, dass bei Geräten, die als elektrischer Verbraucher in einem sogenannten ADR/GGVS-Fahrzeug verwendet werden, bei Ausschalten der Zündung bzw. bei Betätigung eines Notschalters nach einer vorgegebenen Zeit (zum Beispiel 3 Sekunden) keine Energiequelle mehr oder nur eine Energiequelle mit geringer Leistung aktiv sein darf. Üblicherweise werden die elektrischen Verbraucher über eine elektrische Anlage des ADR/GGVS-Fahrzeugs mit Strom versorgt, die beim Ausschalten der Zündung oder bei der Betätigung eines Notschalters mithilfe von Leistungsrelais vollständig von der Fahrzeugbatterie getrennt wird. Dadurch soll ein stromloser Zustand des gesamten Fahrzeugs gewährleistet werden. Diesbezüglich wird bei ADR/GGVS-Fahrzeugen weitestgehend auf batteriebetriebene Geräte verzichtet.

Allerdings verfügen Geräte wie Fahrtenschreiber, Telematik-Geräte, Mautgeräte und Unfalldatenspeicher, die zur Aufrechterhaltung beispielsweise eines Datenpuffers oder einer Integritätsüberwachung eine Grundstromversorgung benötigen, über geräteinterne Batterien, die zum Zweck der elektrischen Aufladung mit der elektrischen Anlage des ADR/GGVS-Fahrzeugs verbunden sein können.

Für den Fall einer Stromlosschaltung des ADR/GGVS-Fahrzeugs ist es bei solchen batteriebetriebenen Geräten von besonderer Bedeutung, dass eine gesicherte Umschaltung auf einen internen Batteriebetrieb erfolgen kann, ohne dass dabei die Erfordernisse der ADR/GGVS missachtet werden. Diesbezüglich sind bereits Lösungen bekannt, bei denen die Umschaltung auf den Batteriebetrieb, beispielsweise zur Verhinderung von Datenverlusten bei der Datenspeicherung, und die Umschaltung auf eine Spannungsquelle mit geringer Leistung, beispielsweise zur Datenpufferung, wie sie bei Betätigen eines (Fahrzeug) Batterie-Trennschalters auftreten können, softwaregesteuert zeitverzögert werden. Die hierzu benutzten Umschaltsysteme verwenden zusätzliche Elektronik und/oder Software und sind aufwendig hinsichtlich der Notwendigkeit ihrer Funktionsüberwachung.

Typischerweise werden die genannten Umschaltsysteme von vornherein in allen elektrischen Verbrauchern mit interner Batterie installiert, obwohl deren zweckentsprechender Einsatz in ADR/GGVS-Fahrzeugen nur einen sehr geringen Prozentsatz ausmacht. Dies führt folglich zu einer unnötigen Verteuerung entsprechender elektrischer Verbraucher.

Die der vorliegenden Erfindung zugrundeliegende Aufgabe besteht darin, eine Anordnung bereitzustellen, mit der eine kostengünstige ADR/GGVS-konforme Stromversorgung elektrischer Verbraucher in Fahrzeugen zur Gefahrgutbeförderung gewährleistet ist.

Aus EP 1 544 050 A1 ist ein System zur Energieversorgung der funktionellen Elemente des Bordnetzes eines Kraftfahrzeugs bekannt. Das System weist unter anderem eine Batterie, einen elektrischen Widerstand und ein Schalterbauteil auf.

Eine Vorrichtung zum Trennen der elektrischen Verbindung zwischen einer Batterie eines Fahrzeugs, insbesondere eines Gefahrgut transportierenden Nutzfahrzeugs, und dessen Bordnetz offenbart DE 199 39 987 C1. Die Vorrichtung weist ein einen Trennschalter betätigendes Schaltgerät und eine Steuereinrichtung zur Ansteuerung des Schaltgerätes auf. Außerdem ist eine Begrenzerschaltung zur Strombegrenzung eines bordnetzunabhängig versorgten Verbrauchers vorgesehen. Der Verbraucher kann insbesondere ein Tachograph sein.

Die Aufgabe wird erfindungsgemäß durch eine Batterieanordnung mit den Merkmalen des Anspruchs 1 gelöst. Besondere Ausführungsformen können den untergeordneten Ansprüchen entnommen werden.

Die erfindungsgemäße Batterieanordnung für elektrische Verbraucher in einem Fahrzeug zur Gefahrgutbeförderung umfasst eine Batterie, die mindestens einen ersten Anschluss aufweist, der mit einem elektrischen Verbraucher elektrisch verbindbar ist, einen ersten elektrischen Widerstand, der mit der Batterie und einem zweiten Anschluss elektrisch in Reihe geschaltet ist, wobei der zweite Anschluss mit dem elektrischen Verbraucher elektrisch verbindbar ist. Weiterhin enthält die Batterieanordnung ein elektrisch parallel zu dem ersten elektrischen Widerstand geschaltetes und mit der Batterie elektrisch verbundenes Schalterbauteil, das so gesteuert ist, dass eine an einem dritten Anschluss anlegbare erste Spannung, die einen vorgebbaren Wert überschreitet, das Schalterbauteil schließt, so dass der erste Widerstand kurzgeschlossen ist. Bei einer anlegbaren ersten Spannung, die den vorgebbaren Wert unterschreitet, öffnet das Schalterbauteil, so dass der Kurzschluss aufgehoben ist.

Bei Anliegen der ersten Spannung an dem dritten Anschluss, die beispielsweise von einer Spannungsquelle eines Fahrzeugs, z. B. von einer Autobatterie oder einem Generator zur Verfügung gestellt wird, kann das Schalterbauteil schließen. Dabei sollte ein Schaltvorgang des Schalterbauteils spannungsabhängig bzw. spannungsgesteuert sein, d. h. das Schalterbauteil schließt erst dann, wenn die erste Spannung den vorgegebenen Wert bzw. eine Schwellenspannung überschritten hat, oder öffnet, wenn die erste Spannung den vorgegebenen Wert bzw. eine Schwellenspannung unterschritten hat.

Für die Batterieanordnung können jeweils unterschiedliche Schalterbauteile mit jeweils unterschiedlichen Schwellenspannungen vorgesehen sein.

Liegt eine erste Spannung an, die die Schwellenspannung überschritten hat, wird das Schalterbauteil geschlossen, wobei der erste Widerstand kurzgeschlossen bzw. überbrückt wird. In diesem Zustand wird der elektrische Verbraucher von der Spannungsquelle des Fahrzeugs mit der ersten Spannung versorgt, wobei die erste Spannung dann auch an dem ersten Anschluss anliegt, mit dem der elektrische Verbraucher elektrisch verbunden ist. Dabei kann die erste Spannung über die Batterie abfallen, so dass dort ein im Verhältnis hoher Ladestrom fließt, der die Batterie, die als wiederaufladbare Batterie ausgebildet ist, lädt.

Bei Wegfall der ersten Spannung an dem dritten Anschluss, beispielsweise durch eine Trennung von der Spannungsquelle des Fahrzeugs, öffnet das Schalterbauteil, so dass der Kurzschluss des ersten Widerstands aufgehoben ist. Dabei liegt auch keine erste Spannung mehr an dem ersten Anschluss an, da auch keine erste Spannung mehr an dem elektrischen Verbraucher anliegt, so dass die Batterie eine Spannungsversorgung des an dem ersten Anschluss und an dem zweiten Anschluss angeschlossenen elektrischen Verbrauchers durch die Bereitstellung einer dritten Spannung übernimmt. Dabei kann ein Entladestrom von der Batterie zu dem elektrischen Verbraucher fließen, der von dem ersten Widerstand begrenzt wird, so dass eine ADR/GGVS-konforme Strom- und Leitungsbegrenzung realisierbar ist. Somit kann der elektrische Verbraucher, beispielsweise ein Fahrtenschreiber, zweckgemäß auch nach dem Wegfall der Spannungsquelle des Fahrzeugs sicher mit Spannung versorgt werden. Ferner ist durch die Batterieanordnung auch nach dem Abschalten der ersten Spannung die Versorgung beispielsweise einer Uhr, eines Datenpuffers und/oder einer Integritätsüberwachung des elektrischen Verbrauchers gewährleistet.

Dadurch, dass die Batterieanordnung alle die Elemente enthält, die notwendig sind, um einen elektrischen Verbraucher wie beispielsweise einen Fahrtenschreiber, ein Telematik-Gerät, ein Mautgerät und/oder einen Unfalldatenspeicher auch bei Wegfall der von der Spannungsquelle des Fahrzeugs gelieferten ersten Spannung mit der von der Batterie bereitgestellten dritten Spannung zu versorgen, sind in dem elektrischen Verbraucher, d. h. in dem Gerät selbst, keine weiteren Schaltungsmaßnahmen notwendig, wodurch sich die Gerätekosten reduzieren.

Bei dem Schalterbauteil kann es sich um ein Halbleiter-Schaltgerät, vorzugsweise einen MOSFET (metal-oxidesemiconductor field-effect transistor) handeln, der vorzugsweise als spannungsgesteuerter n-Kanal-MOSFET ausgeführt ist, bei dem die erste Spannung an einem Gate-Kontakt anliegt. Der n-Kanal-MOSFET eignet sich insbesondere dahingehend als Schalterbauteil, weil dieser erst bei einer an dem Gate-Kontakt anliegenden Spannung spannungsabhängig schaltet und dabei einen Stromfluss von einem Drain-Kontakt zu einem Source-Kontakt zulässt. Zweckgemäß kann das Schalterbauteil Kontakte aufweisen, von denen ein erster Kontakt als Grate-Kontakt, ein zweiter Kontakt ein Source-Kontakt und ein dritter Kontakt als Drain-Kontakt ausgeführt ist. Da ein MOSFET aufgrund der Spannungssteuerung energiearm angesteuert werden kann, kann die notwendige Abschaltung ADR/GGVS-konform und mit einer Abschaltverzögerung zur Datensicherung passiv, z. B. durch die Entladung eines RC-Gliedes erfolgen. Passive Komponenten vereinfachen die ADR/GGVS-Tauglichkeit aufgrund deren geringen Komplexität.

Als Schalterbauteil können aber auch andere Halbleiter-Schaltgeräte, wie beispielswiese bipolare Transistoren, verwendet werden.

Gemäß der erfindungsgemäßen Batterieanordnung ist ein Verzögerungselement zur Verzögerung eines Schaltvorgangs des Schalterbauteils vorgesehen. Dieses ist zwischen dem ersten Kontakt des Schalterbauteils und dem dritten Anschluss elektrisch in Reihe geschaltet. Dabei ist das Verzögerungselement so ausgeführt, dass es bei Wegfall der ersten Spannung eine zweite Spannung bereitstellt, die an den ersten Kontakt anliegt und nach einer vorgebbaren Zeit reduzierbar ist. Hierzu kann in dem Verzögerungselement ein Speicherelement zur Speicherung der ersten Spannung vorgesehen sein, das beispielsweise als elektrischer Kondensator ausgeführt ist, der bei Wegfall der ersten Spannung entladen wird und dabei die zweite Spannung bereitstellt. Für die Dauer der Entladung des Kondensators, d. h. es liegt die zweite Spannung an dem ersten Kontakt an, bleibt das Schalterbauteil geschlossen. Durch die Verwendung eines Potentiometers, das so mit dem Kondensator elektrisch verbunden ist, dass dessen Entladestrom variiert werden kann, kann die Dauer der Entladung eingestellt werden. Demzufolge kann ein Schaltvorgang des Schalterbauteils zeitverzögert werden, wodurch sichergestellt ist, dass für die Dauer der vorgebbaren Zeit - in dieser Zeit bleibt der erste Widerstand kurzgeschlossen - ein hoher Entladestrom der Batterie fließen kann. Der Wegfall der ersten Spannung kann von dem elektrischen Verbraucher registriert werden, so dass beispielsweise ein Abschaltmechanismus eingeleitet werden kann, mit dem der elektrische Verbraucher auf eine Strom- bzw. Spannungsversorgung mit der Batterieanordnung umgeschaltet wird. Dies ist von Vorteil, da die Dauer einer durch das Verzögerungselement hervorgerufenen Schaltzeitverzögerung des Schalterbauteiles dazu verwendet werden kann, um z. B. Daten des elektrischen Verbrauchers sicher speichern zu können.

Ein weiterer Vorteil des Verzögerungselements kann darin bestehen, dass für die Dauer der Schaltzeitverzögerung keine unerwünschten Spannungsspitzen auftreten, wie sie bei abrupten Schaltvorgängen, beispielsweise bei dem Wegfall der Spannungsquelle, wie z. B. bei einem Stromlosschalten der elektrischen Anlage eines Fahrzeugs durch einen Lastabwurf, auftreten können. Die Schaltverzögerung ist so zu wählen, dass z. B. die Daten des elektrischen Verbrauchers gespeichert werden können und die maximal zulässige, laut den ADR/GGVS-Vorschriften vorgegebene Zeit, nicht überschritten wird.

Vorteilhaft ist weiterhin, dass die Reduzierung der zweiten, von dem Verzögerungselement bereitgestellten Spannung, nach einer vorgebbaren Verzögerungszeit T des Verzögerungselements einstellbar ist, wodurch die Schaltzeitverzögerung des Schaltvorgangs des Schalterbauteils genau definiert werden kann.

Zweckgemäß kann das Verzögerungselement als ein RC-Glied ausgeführt sein, bei dem ein zweiter elektrischer Widerstand (R) zwischen dem dritten Anschluss und dem ersten Kontakt elektrisch in Reihe geschaltet ist und der elektrische Kondensator (C) elektrisch parallel zu dem ersten Kontakt des Schalterbauteils geschaltet ist. Während an dem dritten Anschluss die erste Spannung anliegt, kann in dem RC-Glied der Kondensator aufgeladen werden. Bei Wegfall der ersten Spannung kann der Kondensator entladen werden und stellt dabei die zweite Spannung bereit, die an dem ersten Kontakt des Schalterbauteils anliegt. Dabei kann der Kondensator durch den zweiten elektrischen Widerstand und/oder durch das Schalterbauteil entladen werden, wobei die zweite Spannung nach der vorgegebenen Verzögerungszeit T reduziert wird. Die Verzögerungszeit T, d. h. die Entladungsdauer des RC-Gliedes, berechnet sich dabei gemäß den allgemeinen Berechnungsgrundlagen für RC-Glieder im Gleichspannungsbetrieb. Dabei berechnet sich die Zeitkonstante τ (Tau) des RC-Gliedes aus dem Produkt des Widerstandes (R) und der Kapazität des Kondensators (C), wobei sich beispielsweise die Verzögerungszeit T bis zur Hälfte einer exponentiellen Entladung des RC-Gliedes, d. h. die Halbwertzeit der Entladung des RC-Gliedes, aus dem Produkt von τ und dem Logarithmus 2 berechnet. Fällt die zweite Spannung unter den vorgegebenen Wert, der dem Schwellenwert für den Schaltvorgang des Schalterbauteils am ersten Kontakt entspricht, öffnet das Schalterbauteil und hebt den Kurzschluss des ersten Widerstands auf.

Um beim Wegfall der ersten Spannung einen Stromfluss von dem Kondensator des RC-Gliedes in Richtung des dritten Anschlusses bzw. in die über den dritten Anschluss elektrisch verbundene elektrische Anlage zu verhindern, kann zwischen dem dritten Anschluss und dem Verzögerungselement eine Diode, wie z. B. eine Sperr-Diode, elektrisch in Reihe geschaltet sein, die den elektrischen Stromfluss in Richtung des dritten Anschlusses sperrt und für den Stromfluss in entgegengesetzter Richtung durchlässig ist. Insbesondere bei einer niederohmigen Abschaltung ist die an der genannten Position angeordnete Diode vorteilhaft, da sich das RC-Glied sonst ungewollt über den dritten Anschluss entladen würde.

Üblicherweise beträgt die Bordspannung in ADR/GGVS-Fahrzeugen 12 V oder 24 V. Die Spannung der bereits erwähnten Batterie kann eine gerätespezifische und von der Bordspannung unabhängige Spannung aufweisen, die z. B. für Lithium-Batterien/-Akkus 3.6 V betragen kann.

Zum Schutz vor einer Tiefentladung kann die Batterie einen Tiefentladeschutz aufweisen, der die Batterie bzw. die Batterieanordnung zumindest so von dem elektrischen Verbraucher trennt, dass kein Strom mehr aus der Batterie zu dem elektrischen Verbraucher fließen kann. Der Tiefentladeschutz kann beispielsweise mit einem zweiten n-Kanal-MOSFET realisiert werden, der z. B. zwischen der Batterie und dem ersten Anschluss der Batterieanordnung in Reihe geschaltet ist, wobei dessen Gate-Kontakt mit der Batterie elektrisch verbunden ist. Fällt die Spannung der Batterie im batteriebetrieb unter einen Wert, der einem Schwellenwert für einen Schaltvorgang des zweiten n-Kanal-MOSFET entspricht, so sperrt der zweite n-Kanal-MOSFET den Stromfluss der Batterie zu dem elektrischen Verbraucher, wobei die Batterie nicht weiter entladen werden kann.

In einer weiteren Ausführungsform der Batterieanordnung ist ein separates Ladeelement vorgesehen, dass zu der Batterie elektrisch parallel geschaltet ist und eine zusätzliche elektrische Verbindung mit einem Kontenpunkt zwischen dem dritten Anschluss und dem ersten Kontakt aufweist. Über diese elektrische Verbindung kann die Batterie auch dann geladen werden, wenn die Verbindung zu dem elektrischen Verbraucher beispielsweise durch den Tiefentladeschutz getrennt ist.

Zur ADR/GGVS-konformen Strom- und Leistungsbegrenzung sollte der elektrische Widerstand für den Fall, dass die Batterie als 3,6 V-Spannungsquelle ausgebildet ist, mindestens einen Nennwiderstand von 100 Ohm aufweisen. Der Nennwiderstand sollte bevorzugt den ADR/GGVS-Vorschriften entsprechend dimensioniert sein. Dabei ist der Wert des Widerstandes von der Spannung, dem Strom und von einer vorgesehenen Temperatur im bestimmungsgemäßen Betrieb, beispielsweise beim Be- und Entladen eines Gefahrguts, abhängig.

Die Batterieanordnung sollte mit allen seinen Elementen - der Batterie, dem Schalterbauteil und dem ersten Widerstand - in einem Gehäuse, vorzugsweise in einer gegossenen Kunststoffhülle angeordnet bzw. integriert sein. Vorteilhaft kann es zudem sein, wenn das Verzögerungselement ebenfalls in dem Gehäuse integriert ist. Ferner sollte das Gehäuse mindestens jeweils ein Außenkontaktelement des ersten Anschlusses, des zweiten Anschlusses und des dritten Anschlusses aufweisen, wobei die Außenkontaktelemente des ersten Anschlusses und des zweiten Anschlusses mit dem elektrischen Verbraucher verbindbar sind und der Außenkontakt des dritten Anschlusses mit der Spannungsquelle des Fahrzeugs verbindbar sein kann. Die Batterieanordnung kann also als separate ADR/GGVS-Strom-Spannungsversorgung angesehen werden. Die Batterieanordnung stellt somit ein ADR/GGVS-konformes Modul dar, das in jedem batteriebetriebenen Gerät nachgerüstet werden kann bzw. als wiederaufladbare Batterie eingebaut werden kann, ohne dass Änderungen an dem Gerät notwendig sind. Dies ist besonders vorteilhaft, da die Entwicklungskosten und der Zulassungsaufwand hinsichtlich der ADR/GGVS-Konformität der genannten Geräte bzw. elektrischen Verbraucher reduziert werden kann.

Ein elektrisches System für ein Fahrzeug zur Gefahrgutbeförderung umfasst mindestens einen elektrischen Verbraucher, eine Spannungsquelle des Fahrzeugs und die oben beschriebene Batterieanordnung, wobei mindestens der erste Anschluss und der zweite Anschluss mit dem elektrischen Verbraucher elektrisch verbunden ist und der dritte Anschluss mit der Spannungsquelle des Fahrzeugs verbunden ist. Dabei ist es vorteilhaft, dass mit dem genannten elektrischen System gleich mehrere elektrische Verbraucher bei Wegfall der ersten Spannung von einer einzigen Batterieanordnung der beschriebenen Art mit Strom bzw. Spannung versorgt werden können. Die Batterieanordnung kann dazu an einer zentralen Position in dem ADR/GGVS-Fahrzeug gut zugänglich positioniert sein und somit die Stromversorgung von elektrischen Verbrauchern gewährleisten, die schwer zugänglich in dem Fahrzeug installiert sind. Unter Berücksichtigung der ADR/GGVS-Konformität, sollten in den elektrischen Verbrauchern Dioden angeordnet sein, die den Stromfluss von dem elektrischen Verbraucher bzw. von der Batterieanordnung in das elektrische System sperren. Ein weiterer Vorteil besteht darin, dass die in einem solchen elektrischen System verwendeten elektrischen Verbraucher aufgrund des Fehlens eines separaten Gehäuses für die Batterieanordnung wesentlich kleiner konstruiert werden können.

Bei einem Verfahren zum Betrieb der Batterieanordnung wie oben beschriebener Art, wird an dem dritten Anschluss die von der Spannungsquelle zur Versorgung des elektrischen Verbrauchers gelieferte erste Spannung angelegt. Dabei wird das Schalterbauteil geschlossen, wobei der erste Widerstand kurzgeschlossen wird, so dass die an dem ersten Anschluss anliegende erste Spannung über die Batterie abfällt, wobei die Batterie elektrisch geladen wird. Dies ist möglich, da in dem elektrischen Verbraucher eine interne Schaltung vorhanden ist, mit der die erste Spannung auf den ersten Anschluss der Batterieanordnung legbar ist.

Bei Wegfall der ersten Spannung wird das Schalterbauteil geöffnet und der Kurzschluss an dem ersten Widerstand aufgehoben. Dabei stellt die Batterie eine dritte Spannung bereit, so dass ein durch den ersten Widerstand begrenzter Strom fließt, mit dem der elektrische Verbraucher versorgt wird. Das Verfahren gewährleistet bei Wegfall der ersten Spannung, beispielsweise bei einer Stromlosschaltung des Fahrzeugs, eine sichere Umschaltung auf die Spannungs- bzw. Stromversorgung mit der beschriebenen Batterieanordnung. Dadurch können beispielwiese Uhren, Datenpuffer oder eine Integritätsüberwachung des elektrischen Verbrauchers ohne Datenverlust weiter betrieben werden.

Nachfolgend wird die vorliegende Erfindung anhand eines Ausführungsbeispiels in Verbindung mit den Figuren 1 bis 3 näher erläutert. Es zeigt:
- Figur 1a: ein Schaltungsbeispiel der Batterieanordnung,
- Figur 1b: ein Schaltungsbeispiel der Batterieanordnung mit Verzögerungselement,
- Figur 2: ein zweites Schaltungsbeispiels der Batterieanordnung,
- Figur 3: ein drittes Schaltungsbeispiels der Batterieanordnung mit separatem Ladeelement.

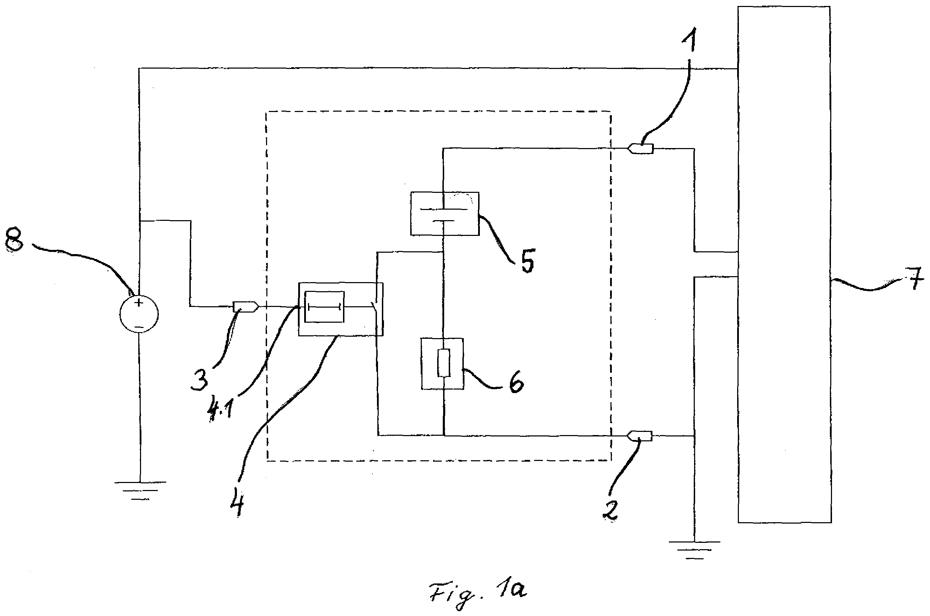

Figur 1a zeigt eine schematische Darstellung einer beispielhaften Schaltung der Batterieanordnung für einen elektrischen Verbraucher 7 in einem Fahrzeug zur Gefahrgutbeförderung. Die Batterieanordnung umfasst eine Batterie 5, die eine 12 V-Nennspannung und mindestens einen ersten Anschluss 1 aufweist, der mit dem elektrischen Verbraucher 7 elektrisch verbunden ist, sowie einen ersten elektrischen Widerstand 6, der mit der Batterie 5 und einem zweiten Anschluss 2 elektrisch in Reihe geschaltet ist, wobei der zweite Anschluss 2 mit dem elektrischen Verbraucher 7 elektrisch verbunden ist. Weiterhin umfasst die Batterieanordnung ein elektrisch parallel zu dem ersten elektrischen Widerstand 6 geschaltetes und mit der Batterie 5 elektrisch verbundenes Schalterbauteil 4.

Wie weiterhin in Figur 1a mit der gestrichelten Umrandung dargestellt ist, bildet die Batterieanordnung eine separate Einheit, wobei die Batterie 5, das Schalterbauteil 4 und der erste Widerstand 6 im vorliegenden Beispiel in einem gemeinsamen Gehäuse angeordnet sind. Im vorliegenden Fall wird das Gehäuse durch eine gegossene Kunststoffhülle gebildet, in die die vorgenannten Elemente integriert sind. Dabei weist das Gehäuse jeweils mindestens ein Außenkontaktelement des ersten Anschlusses 1, des zweiten Anschlusses 2 und des dritten Anschlusses 3 auf.

In der Figur 1a ist ferner eine elektrische Anlage des Fahrzeugs dargestellt, mit der der elektrische Verbraucher 7 elektrisch verbunden ist. Die elektrische Anlage ist mit einer Spannungsquelle 8, die im vorliegenden Fall als eine Autobatterie mit einer 12 V-Nennspannung ausgeführt ist, elektrisch verbunden.

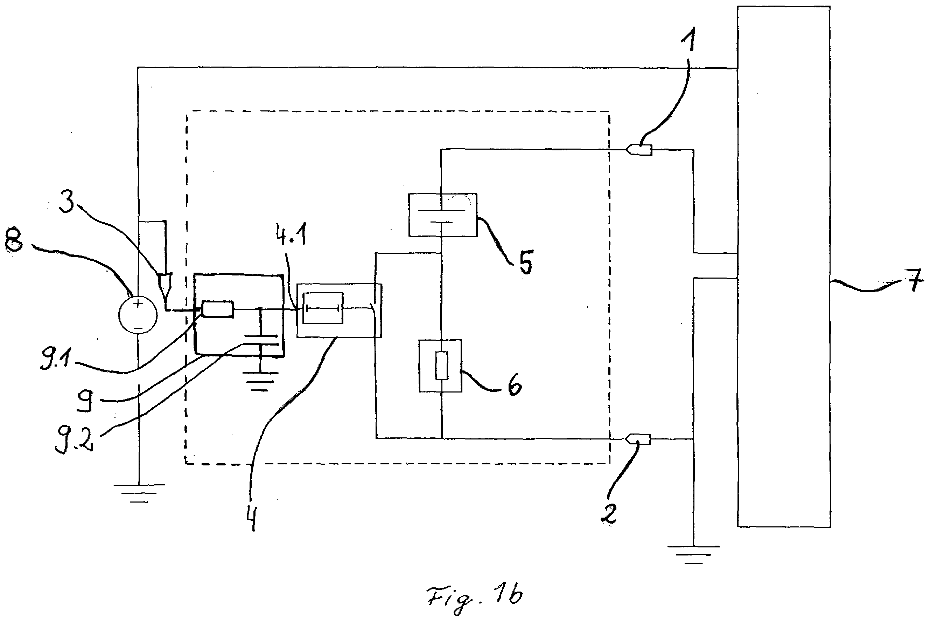

Bei dem Schalterbauteil 4 handelt es sich in dem vorliegenden Ausführungsbeispiel um ein Halbleiterschaltgerät, das als ein spannungsgesteuerter n-Kanal-MOSFET ausgeführt ist, wobei an dessen Gate-Kontakt, der in Fig. 1 mit dem Bezugszeichen 4.1 gezeigt ist, die von der Spannungsquelle 8 gelieferte erste Spannung anliegt. Dabei wird eine über den Gate-Kontakt und Source-Kontakt abfallende Schwellenspannung überschritten, so dass ein Stromfluss von einem Drain-Kontakt zu dem Source-Kontakt erfolgt. Auf diese Weise schaltet der n-Kanal-MOSFET, so dass der erste Widerstand 6 kurzgeschlossen bzw. überbrückt wird. Dabei kann die erste Spannung, die an dem ersten Anschluss 1 anliegt, allein über die Batterie 5 abfallen, so dass dort ein im Verhältnis hoher Ladestrom fließen kann, der die Batterie 5 lädt.

Bei Wegfall der ersten Spannung an dem dritten Anschluss 3, beispielsweise durch eine Trennung der Spannungsquelle 8 des Fahrzeugs, liegt an dem Gate-Kontakt des n-Kanal-MOSFETs keine Spannung mehr an, bzw. ist die Spannung am Gate-Kontakt unterhalb der Schwellenspannung. Dabei kann von dem Drain-Kontakt zu dem Source-Kontakt des n-Kanal-MOSFETs kein Strom mehr fließen, so dass dieser sperrt, so dass der Kurzschluss des ersten Widerstands 6 aufgehoben ist. Da in diesem Fall auch keine erste Spannung mehr an dem ersten Anschluss 1 anliegt, übernimmt die Batterie 5 die Spannungsversorgung des an dem ersten Anschluss 1 und an dem zweiten Anschluss 2 angeschlossenen elektrischen Verbrauchers 7 durch die Bereitstellung einer dritten Spannung, die der Nennspannung der Batterie 5 entspricht. Der dabei fließende Entladestrom wird von dem ersten Widerstand, der mit 400 Ohm ausgelegt ist, begrenzt, so dass eine ADR/GGVS-konforme Strombegrenzung auf circa 30 mA realisierbar ist.

In den Ausführungsformen ist, wie in der Figur 1b schematisch dargestellt ist, zwischen dem Kontakt 4.1, d. h. zwischen dem Gate-Kontakt des n-Kanal-MOSFETs und dem dritten Anschluss 3, ein Verzögerungselement 9 in Reihe geschaltet. Dabei ist das Verzögerungselement 9 als RC-Glied ausgeführt, bei dem ein zweiter elektrischer Widerstand 9.1 zwischen dem dritten Anschluss 3 und dem ersten Kontakt elektrisch in Reihe geschaltet ist und ein elektrischer Kondensator 9.2 elektrisch parallel zu dem ersten Kontakt 4.1 des Schalterbauteils geschaltet ist. Während an dem dritten Anschluss die erste Spannung anliegt, wird der Kondensator 9.2 aufgeladen. Bei Wegfall der ersten Spannung entlädt der Kondensator 9.2 und stellt dabei die zweite Spannung bereit, die an dem ersten Kontakt 4.1 des Schalterbauteils 4 anliegt. Entsprechend wird der Kondensator 9.2 durch das Schalterbauteil 4 entladen. Dabei wird eine Schaltverzögerung des n-Kanal-MOSFETs erzielt, da dieser erst dann schaltet, d. h. den Stromfluss vom Drain-Kontakt zum Source-Kontakt sperrt, wenn die Spannung am Gate-kontakt einen Wert unterhalb der Schwellenspannung erreicht hat.

Es ist vorteilhaft, dass zwischen dem dritten Anschluss 3 und dem zweiten Widerstand 9.1, d. h. vor dem Verzögerungselement 9, eine Diode elektrisch in Reihe geschaltet ist, die einen elektrischen Stromfluss in Richtung des dritten Anschlusses 3 sperrt.

Hinsichtlich der Batterie 5 können verschiedene Ausführungsformen der Batterieanordnung gewählt werden, wobei die Batterie 5 unterschiedliche Nennspannungen aufweisen kann, die gerätespezifisch und von der Bordspannung des Fahrzeugs unabhängig ist. In der bevorzugten Ausführungsform besitzt die Batterie 5 eine Nennspannung von 3,6 V.

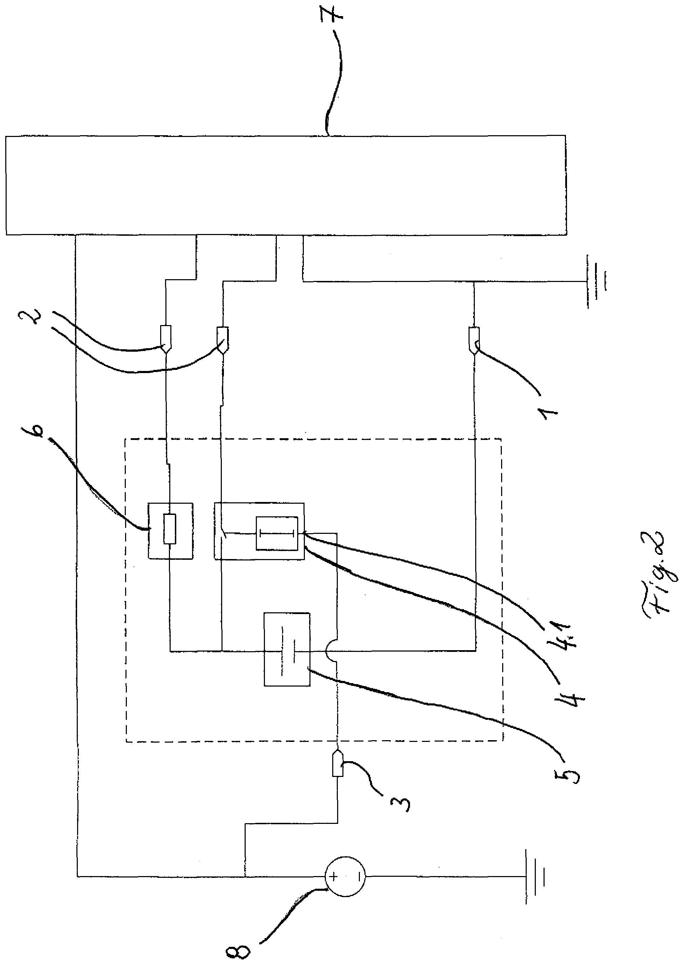

Die in Figur 2 schematisch dargestellte Schaltung entspricht im Wesentlichen den Merkmalen der in Figur 1 gezeigten Schaltung, mit dem Unterschied, dass der erste Widerstand 6 und das Schalterbauteil 4 jeweils einen separaten zweiten Anschluss 2 aufweisen und die Polung der Batterie 5 gegenüber der Batterie 5 aus Figur 1 invertiert ist. Der Dauerstromkreis, d. h. der von der Batterie 5 versorgte Stromkreis, ist funktional als auch elektrisch von dem geschalteten Stromkreis, d. h. der elektrischen Anlage des Fahrzeugs, getrennt.

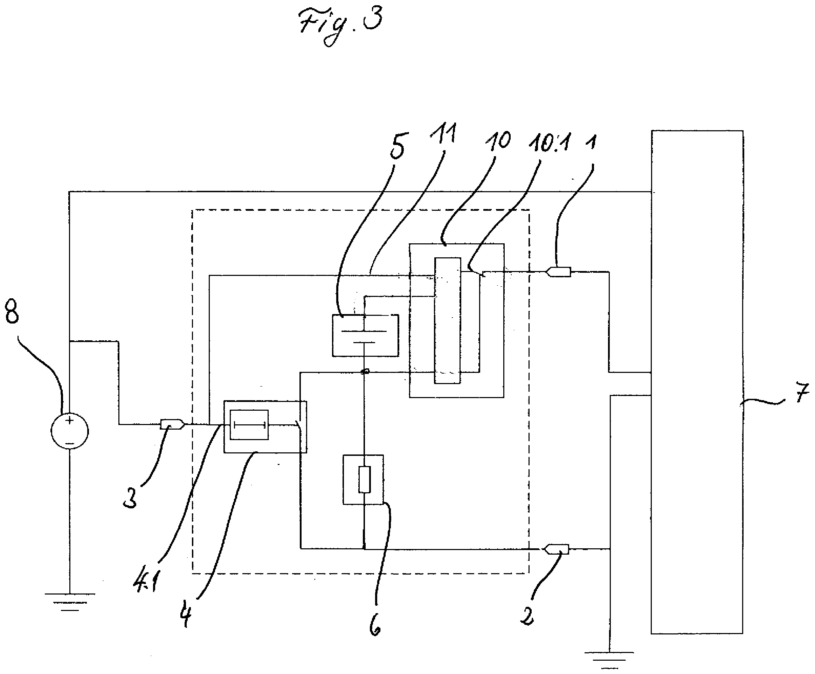

Figur 3 zeigt ebenfalls eine Ausführungsform der in Fig. 1 dargestellten Schaltung, mit dem Unterschied, dass ein separates Ladeelement 10 mit Tiefentladeschutz 10.1 vorhanden ist, das elektrisch parallel zu der Batterie 5 geschaltet ist. Dabei weist das Ladeelement 10 eine zusätzliche elektrische Verbindung 11 mit einem Kontenpunkt zwischen dem dritten Anschluss 3 und dem ersten Kontakt 4.1 - dem Gate-Kontakt - auf. Der Tiefentladeschutz 10.1 ist mit einem zweiten n-Kanal -MOSFET gebildet, der zwischen der Batterie 5 und dem ersten Anschluss 1 in Reihe geschaltet ist, wobei dessen Gate-Kontakt mit der Batterie 5 elektrisch verbunden ist. Fällt die Spannung der Batterie 5 im Batteriebetrieb unter einen Wert, der einem Schwellenwert für einen Schaltvorgang des zweiten n-Kanal-MOSFET entspricht, so sperrt dieser den Stromfluss der Batterie 5 zu dem elektrischen Verbraucher 7, so dass die Batterie 5 nicht weiter entladen wird. Bei Wiederanlegen der ersten Spannung an dem dritten Anschluss 3 wird die Batterie 5 über die zusätzliche elektrische Verbindung 11 geladen.

Die Schaltungsanordnung des Ladeelements 10 kann bei Bedarf nachgerüstet werden, beispielsweise wenn eine zuvor verwendete nicht-wiederaufladbare Batterie durch eine wiederaufladebare Batterie ersetzt wird, so dass diese fortan wiederaufgeladen werden kann.

## Patentansprüche

1. Batterieanordnung für elektrische Verbraucher (7) in einem Fahrzeug zur Gefahrgutbeförderung, umfassend
- eine Batterie (5), die mindestens einen ersten Anschluss (1) aufweist, der mit einem elektrischen Verbraucher (7) elektrisch verbindbar ist,
- einen ersten elektrischen Widerstand (6), der mit der Batterie (5) und einem zweiten Anschluss (2) elektrisch in Reihe geschaltet ist, wobei der zweite Anschluss (2) mit dem elektrischen Verbraucher (7) elektrisch verbindbar ist, und
- ein elektrisch, parallel zu dem ersten elektrischen Widerstand (6) geschaltetes und mit der Batterie (5) elektrisch verbundenes Schalterbauteil (4), das so gesteuert ist, dass eine an einem dritten Anschluss (3) anlegbare erste Spannung, die einen vorgebbaren Wert überschreitet, das Schalterbauteil (4) schließt, so dass der erste Widerstand (6) kurzgeschlossen ist, und bei der anlegbaren ersten Spannung, die den vorgebbaren Wert unterschreitet, das Schalterbauteil (4) öffnet, so dass der Kurzschluss aufgehoben ist, **gekennzeichnet dadurch, dass** ein Verzögerungselement (9) zur Verzögerung eines Schaltvorgangs des Schalterbauteils (4) vorgesehen ist, das zwischen einem ersten Kontakt (4.1) des Schalterbauteils (4) und dem dritten Anschluss (3) elektrisch in Reihe geschaltet ist und so ausgeführt ist, dass es bei Wegfall der ersten Spannung eine zweite Spannung bereitstellt, die an den ersten Kontakt (4.1) anliegt und nach einer vorgebbaren Zeit reduzierbar ist.

2. Batterieanordnung nach Anspruch 1, **dadurch gekennzeichnet, dass** die Batterie (5), das Schalterbauteil (4) und der erste Widerstand (6) in einem Gehäuse, vorzugsweise in einer gegossenen Kunststoffhülle, angeordnet sind.

3. Batterieanordnung nach Anspruch 2, **dadurch gekennzeichnet, dass** das Gehäuse jeweils mindestens ein Außenkontaktelement des ersten Anschlusses (1), des zweiten Anschlusses (2) und des dritten Anschlusses (3) aufweist.

4. Batterieanordnung nach einem der vorhergehenden Ansprüche, **dadurch gekennzeichnet, dass** das Schalterbauteil (4) ein Halbleiter-Schaltgerät, bevorzugt ein MOSFET, ist.

5. Batterieanordnung nach Anspruch 4, **dadurch gekennzeichnet, dass** der MOSFET als ein spannungsgesteuerter n-Kanal-MOSFET ausgeführt ist.

6. Batterieanordnung nach einem der vorhergehenden Ansprüche, **dadurch gekennzeichnet, dass** das Verzögerungselement ein RC-Glied umfasst, bei dem ein elektrischer Widerstand (9.1) zwischen dem dritten Anschluss (3) und dem ersten Kontakt (4.1) elektrisch in Reihe geschaltet ist und ein elektrischer Kondensator (9.2) elektrisch parallel zu dem ersten Kontakt (4.1) geschaltet ist.

7. Batterieanordnung nach einem der vorhergehenden Ansprüche, **dadurch gekennzeichnet, dass** eine Diode, die zwischen dem dritten Anschluss (3) und dem Verzögerungselement elektrisch in Reihe geschaltet ist, einen elektrischen Stromfluss in Richtung des dritten Anschlusses (3) sperrt.

8. Batterieanordnung nach einem der Ansprüche 1 bis 7,
**dadurch gekennzeichnet, dass** die Batterie (5) eine wiederaufladbare Batterie ist.

9. Batterieanordnung nach einem der Ansprüche 1 bis 8, **dadurch gekennzeichnet, dass** an den ersten Anschluss (1) die erste Spannung anlegbar ist, so dass dort ein elektrischer Ladestrom über der Batterie (5) fließt mit dem die Batterie (5) elektrisch aufladbar ist.

10. Batterieanordnung nach einem der Ansprüche 1 bis 9, **dadurch gekennzeichnet, dass** ein separates Ladeelement (10) mit Tiefentladeschutz (10.1) vorhanden ist, das elektrisch parallel zu der Batterie (5) geschaltet ist.

11. Elektrisches System für ein Fahrzeug zur Gefahrgutbeförderung mit mindestens einem elektrischen Verbraucher (7), einer Spannungsquelle (8) und einer Batterieanordnung nach einem der Ansprüche 1 bis 10, bei der mindestens der erste Anschluss (1) und der zweite Anschluss (2) mit dem elektrischen Verbraucher (7) elektrisch verbunden ist und der dritte Anschluss (3) mit der Spannungsquelle (8) elektrisch verbunden ist.

12. Elektrisches System nach Anspruch 11, **dadurch gekennzeichnet, dass** die Spannungsquelle (8) eine Fahrzeugbatterie und/oder ein Generator ist.

## Claims

1. Battery arrangement for electrical consumers (7) in a vehicle for the carriage of dangerous goods, comprising
- a battery (5), which has at least one first connection (1), which is electrically connectable to an electrical consumer (7),
- a first electrical resistor (6), which is connected electrically in series with the battery (5) and a second connection (2), wherein the second connection (2) is electrically connectable to the electrical consumer (7), and
- a switch component part (4), which is connected electrically in parallel with the first electrical resistor (6) and is electrically connected to the battery (5) and which is controlled in such a way that a first voltage which can be applied at a third connection (3) and which exceeds a presettable value closes the switch component part (4) so that the first resistor (6) is short-circuited, and in the case of the first voltage which can be applied which falls below the presettable value, the switch component part (4) opens so that the short circuit is canceled,
**characterized in that** a delay element (9) for delaying a switching operation of the switch component part (4) is provided, which delay element is connected electrically in series between a first contact (4.1) of the switch component part (4) and the third connection (3) and is embodied in such a way that, in the case of a loss of the first voltage, a second voltage is provided which is present at the first contact (4.1) and is reduceable after a presettable time.

2. Battery arrangement according to Claim 1, **characterized in that** the battery (5), the switch component part (4) and the first resistor (6) are arranged in a housing, preferably in a cast plastic shell.

3. Battery arrangement according to Claim 2, **characterized in that** the housing has in each case at least one outer contact element of the first connection (1), the second connection (2) and the third connection (3).

4. Battery arrangement according to any of the preceding claims, **characterized in that** the switch component part (4) is a semiconductor switching device, preferably a MOSFET.

5. Battery arrangement according to Claim 4, **characterized in that** the MOSFET is in the form of a voltage-controlled n-channel MOSFET.

6. Battery arrangement according to any of the preceding claims, **characterized in that** the delay element comprises an RC element, in which an electrical resistor (9.1) is connected electrically in series between the third connection (3) and the first contact (4.1), and an electrical capacitor (9.2) is connected electrically in parallel with the first contact (4.1).

7. Battery arrangement according to any of the preceding claims, **characterized in that** a diode which is connected electrically in series between the third connection (3) and the delay element blocks an electric current flow in the direction of the third connection (3).

8. Battery arrangement according to one of Claims 1 to 7, **characterized in that** the battery (5) is a rechargeable battery.

9. Battery arrangement according to one of Claims 1 to 8, **characterized in that** the first voltage can be applied to the first connection (1) so that an electric charging current flows there via the battery (5), by means of which electric charging current the battery (5) is electrically chargeable.

10. Battery arrangement according to one of Claims 1 to 9, **characterized in that** a separate charging element (10) with deep discharge protection (10.1) is provided, which is connected electrically in parallel with the battery (5).

11. Electrical system for a vehicle for the carriage of dangerous goods comprising at least one electrical consumer (7), a voltage source (8) and a battery arrangement according to one of Claims 1 to 10, in which at least the first connection (1) and the second connection (2) are electrically connected to the electrical consumer (7), and the third connection (3) is electrically connected to the voltage source (8).

12. Electrical system according to Claim 11, **characterized in that** the voltage source (8) is a vehicle battery and/or a generator.

## Revendications

1. Système de batterie destiné à des consommateurs électriques (7) dans un véhicule servant au transport de produits dangereux, comprenant
- une batterie (5) qui comporte au moins une première borne (1) pouvant être reliée électriquement à un consommateur électrique (7),
- une première résistance électrique (6) qui est connectée électriquement en série à la batterie (5) et à une deuxième borne (2), dans lequel la deuxième borne (2) peut être reliée électriquement au consommateur électrique (7), et
- un composant de commutation (4) électriquement relié en parallèle à la première résistance électrique (6) et à la batterie (5), qui est commandé de manière à ce qu'une première tension applicable à une troisième borne (3), qui dépasse une valeur pouvant être prédéfinie, ferme le composant de commutation (4) afin que la première résistance (6) soit court-circuitée et, lorsque la première tension applicable s'abaisse en dessous de la valeur pouvant être prédéfinie, le composant de commutation (4) s'ouvre de manière à supprimer le court-circuit,
**caractérisé en ce qu'**il est prévu, pour alimenter un processus de commutation du composant de commutation (4), un élément d'alimentation (9) qui est connecté électriquement en série entre un premier contact (4.1) du composant de commutation (4) et la troisième borne (3) et est réalisé de manière à fournir, en cas de suppression de la première tension, une deuxième tension qui est appliquée au premier contact (4.1) et peut être réduite au bout d'un temps pouvant être prédéfini.

2. Système de batterie selon la revendication 1, **caractérisé en ce que** la batterie (5), le composant de commutation (4) et la première résistance (6) sont disposés dans un boîtier, de préférence dans une enveloppe en matière plastique coulée.

3. Système de batterie selon la revendication 2, **caractérisé en ce que** le boîtier comporte respectivement au moins un élément de contact extérieur de la première borne (1), de la deuxième borne (2) et de la troisième borne (3).

4. Système de batterie selon l'une quelconque des revendications précédentes, **caractérisé en ce que** le composant de commutation (4) est un appareil de commutation à semiconducteur, de préférence un transistor MOSFET.

5. Système de batterie selon la revendication 4, **caractérisé en ce que** le transistor MOSFET est réalisé sous la forme d'un transistor MOSFET à canal n commandé en tension.

6. Système de batterie selon l'une quelconque des revendications précédentes, **caractérisé en ce que** l'élément d'alimentation comprend un élément RC, dans lequel une résistance électrique (9.1) est électriquement connectée en série entre la troisième borne (3) et le premier contact (4.1) et **en ce qu'**un condensateur électrique (9.2) est électriquement connecté en parallèle au premier contact (4.1).

7. Système de batterie selon l'une quelconque des revendications précédentes, **caractérisé en ce qu'**une diode, électriquement connectée en série entre la troisième borne (3) et l'élément d'alimentation, bloque le passage d'un courant électrique dans la direction de la troisième borne (3).

8. Système de batterie selon l'une quelconque des revendications 1 à 7, **caractérisé en ce que** la batterie (5) est une batterie rechargeable.

9. Système de batterie selon l'une quelconque des revendications 1 à 8, **caractérisé en ce que** la première tension peut être appliquée à la première borne (1) de manière à ce qu'un courant électrique de charge passe à travers la batterie (5) de manière à ce qu'il puisse charger électriquement la batterie (5).

10. Système de batterie selon l'une quelconque des revendications 1 à 9, **caractérisé en ce qu'**il est prévu un élément de charge séparé (10) ayant une protection contre les décharges profondes (10.1), qui est électriquement connecté en parallèle à la batterie (5).

11. Système électrique destiné à un véhicule servant au transport de produits dangereux, comportant au moins un consommateur électrique (7), une source de tension (8) et un système de batterie selon l'une quelconque des revendications 1 à 10, dans lequel au moins la première borne (1) et la deuxième borne (2) sont électriquement connectées au consommateur électrique (7) et la troisième borne (3) est électriquement reliée à la source de tension (8).

12. Système électrique selon la revendication 11, **caractérisé en ce que** la source de tension (8) est une batterie pour véhicule et/ou un générateur.
